# FASCICULE DE BREVET EUROPEEN

(11) **EP 2 686 618 B1**
(45) Date de publication et mention de la délivrance du brevet: **03.02.2016**
(21) Numéro de dépôt: 12708836.7
(22) Date de dépôt: 13.03.2012
(51) Int. Cl.: F24J 2/07, F24J 2/16, F24J 2/38, F24J 2/40, F24J 2/46, G01S 3/786, F24J 2/10

(54) **MODULE RÉCEPTEUR POUR CENTRALE SOLAIRE À SURVEILLANCE THERMIQUE INTÉGRÉE**
EMPFANGSMODUL FÜR EIN SOLARKRAFTWERK MIT INTEGRIERTER THERMISCHER ÜBERWACHUNG
RECEIVER MODULE FOR SOLAR POWER STATION WITH IN-BUILT THERMAL MONITORING

(30) Priorité: 14.03.2011 FR 1152057
(43) Date de publication de la demande: 22.01.2014
(73) Titulaire: Commissariat à l'Énergie Atomique et aux Énergies Alternatives, 75015 Paris (FR)
(72) Inventeur: COUTURIER, Raphaël, F-38360 Sassenage (FR); BRUCH, Arnaud, F-38100 Grenoble (FR)
(74) Mandataire: Ahner, Philippe
(86) Numéro de dépôt international: PCT/EP2012/054312
(87) Numéro de publication internationale: WO 2012/123433

(56) Documents cités:
- EP-A1- 2 161 516
- WO-A1-03/010471
- DE-A1- 2 511 740
- DE-A1-102008 039 692
- US-A1- 2009 000 613
- US-B1- 6 442 937

## Description

### DOMAINE TECHNIQUE ET ART ANTÉRIEUR

La présente invention se rapporte à un module récepteur solaire pour centrale solaire à surveillance thermique intégrée, à un récepteur solaire comportant au moins deux tels modules récepteurs et à une centrale solaire à concentration de type Fresnel comportant au moins un tel récepteur.

La technologie solaire thermique à concentration consiste à utiliser le rayonnement solaire pour chauffer un fluide caloporteur servant de source chaude dans un cycle thermodynamique. La concentration permet d'atteindre des températures plus ou moins élevées et ainsi de bénéficier de rendements de conversion thermodynamiques plus ou moins importants. Les technologies développées se distinguent par leur moyens de concentration des rayons solaires mis en oeuvre, par les moyens de transport de la chaleur, et éventuellement de stockage de la chaleur qui sont utilisés, i.e. le fluide caloporteur utilisé et des moyens de conversion thermodynamique qui sont par exemple des turbines à vapeur, des turbines à gaz ou des moteurs Stirling.

Il existe typiquement quatre familles de systèmes solaires à concentration ("Concentrating Solar Power" ou CSP en anglais) :
- les collecteurs cylindro-paraboliques à foyer linéaire,
- les concentrateurs linéaires de Fresnel,
- les systèmes à tour à récepteur central, et
- les paraboles à foyer mobile.

Chaque système solaire à concentration comporte un récepteur solaire ayant pour fonction de transférer à un fluide, tel que l'eau, l'huile ou un gaz, la chaleur du rayonnement solaire. Ce récepteur solaire forme donc un échangeur de chaleur. Cet échangeur est formé d'un ou de plusieurs tubes placés en parallèle dans lesquels circule le fluide caloporteur.

Dans le cas particulier d'une centrale solaire à concentration de type Fresnel, le récepteur solaire reçoit les rayons lumineux réfléchis par des miroirs et les transmet au fluide caloporteur sous forme de chaleur.

Un récepteur solaire comporte typiquement :
- un absorbeur qui reçoit le flux solaire sur sa face inférieure et dans lequel circule le fluide caloporteur, par exemple de l'huile ou de la vapeur d'eau,
- éventuellement une couche d'un matériau isolant thermique permettant de limiter les pertes thermiques depuis l'absorbeur vers l'extérieur,
- éventuellement un panneau vitré permettant d'isoler l'absorbeur du milieu extérieur et délimitant une cavité fermée entre l'absorbeur et la vitre.

Le récepteur solaire est suspendu par une structure métallique au dessus des miroirs.

L'absorbeur peut être formé d'un seul tube dans lequel circule un caloporteur ou alors de plusieurs tubes juxtaposés.

Le flux solaire réfléchi par les miroirs peut ne pas être correctement orienté et/ou focalisé par rapport à l'absorbeur et la tâche solaire concentrée peut alors éclairer une partie de la structure métallique, au lieu de n'éclairer que l'absorbeur.

Outre le fait qu'une partie du flux réfléchie n'est pas transmise au fluide caloporteur et, de ce fait est perdue, la structure métallique est échauffée. Il a été estimé qu'une élévation de température de 300°C de la structure métallique pouvait survenir. Une telle élévation de température entraîne dans une structure en acier une dilatation de l'ordre de 5 mm/m. Lorsque le rayonnement solaire diminue ou disparaît, par exemple le soir ou lors de passage nuageux, la température de la structure métallique baisse. La structure subit alors des cycles thermiques qui peuvent entraîner des déformations permanentes et un endommagement de la structure.

En fonctionnement normal, la structure métallique a une température de fonctionnement typiquement comprise entre 50°C et 350°C, celle-ci dépendant du caloporteur utilisé.

Le document WO 2001/025808 décrit un tel récepteur solaire équipé d'un robot destiné à mesurer la répartition de la densité du rayonnement solaire orienté vers l'absorbeur et ainsi vérifier si les réflecteurs de l'installation sont correctement placés.

Ce robot se déplace sur le récepteur et le long de celui-ci. Ce dispositif est complexe, encombrant, demande une maintenance importante et ne donne aucune information sur la structure métallique.

De plus, ce dispositif ne permet de pas détecter dynamiquement un problème de focalisation et/ou de miroirs lors du fonctionnement.

Le document DE 2511740 A1 décrit un module récepteur selon le préambule de la revendication 1.

### EXPOSÉ DE L'INVENTION

C'est par conséquent un but de la présente invention d'offrir un récepteur solaire de réalisation simple et robuste dans lequel un défaut d'orientation et/ou de focalisation du flux solaire sur l'absorbeur peut être aisément détecté.

Le but précédemment énoncé est atteint par un récepteur solaire comportant une structure métallique, au moins un absorbeur supporté par la structure métallique et des moyens disposés au niveau de la structure métallique pour détecter une différence de température par rapport à une température de référence sur celle-ci. Cette différence de température est représentative d'un défaut de positionnement et/ou de focalisation du flux solaire sur l'absorbeur.

En d'autres termes, on détecte un défaut de positionnement et/ou de focalisation de la tâche solaire concentrée par l'apparition d'un écart de température de la structure métallique, à proximité de l'absorbeur, par rapport à sa température dans un état de fonctionnement optimal dans lequel la tâche solaire n'éclaire que l'absorbeur.

Grâce à l'invention, la détection de l'apparition d'un écart de température sur les bords de la structure autour de la cavité permet d'avoir des informations qualitative sur le type de défaut que présente le flux, soit il est orienté trop à gauche par rapport à l'absorbeur, soit il est orienté trop à droite par rapport à l'absorbeur et/ou soit il est diffus. On peut donc surveiller l'évolution thermique de la structure et le fonctionnement général de la centrale sans avoir de données quantitatives sur le flux mais uniquement en disposant de données qualitative sur son état d'orientation/de focalisation et/ou de diffusion. Cette détection est en outre obtenue de manière très simple et très fiable.

De manière avantageuse, la connaissance de la valeur de l'écart de température peut permettre d'effectuer uns surveillance encore plus approfondie de la centrale.

Par exemple sont mis en oeuvre de simples thermocouples distribués le long de la structure métallique de part et d'autre de l'absorbeur. Par exemple, ils sont par paire, chaque paire mesure la température des parties gauche et droit de la structure dans un plan orthogonal à l'axe du récepteur.

En général, les miroirs sont répartis par groupes dans la longueur de la centrale, et l'orientation de chaque groupe se fait par un seul actionneur de sorte que les miroirs d'un groupe forment un ensemble monolithique. On peut alors prévoir de détecter une différence de température, à gauche et à droite de l'absorbeur, en un seul endroit d'une section de la structure métallique du récepteur qui est éclairée par un groupe de miroirs, puisqu'on ne peut corriger individuellement l'orientation des miroirs à moins d'agir manuellement directement sur chaque miroir. De préférence on décale le pas des moyens de détection et celui des groupes de miroirs.

La présente invention a alors pour objet un module récepteur pour centrale solaire, ledit module récepteur comportant une structure métallique et un module absorbeur, la structure métallique définissant une cavité dans le fond de laquelle est logé le module absorbeur, ladite cavité étant munie d'une ouverture destinée à être orientée vers au moins un miroir de la centrale solaire, ladite ouverture étant bordée par au moins une portion latérale de la structure métallique, ledit module récepteur comportant également moyens disposés sur ladite au moins une portion latérale pour détecter au moins un écart de température entre une température de référence et un premier point de la portion latérale, et un écart de température entre une température de référence et un deuxième point de la portion latérale, lesdits premier et deuxième points de la portion latérale étant opposés par rapport à un plan de symétrie de la cavité.

Dans un exemple de réalisation où le module récepteur présente un axe longitudinal et la cavité s'étend le long de l'axe longitudinal, ladite structure métallique peut comporter deux portions latérales s'étendant longitudinalement de part et d'autre de la cavité, les deux points de mesures étant disposés sur chacune de portions latérales par rapport à l'axe longitudinal, avantageusement les deux points étant contenus dans un plan orthogonal à l'axe longitudinal.

De manière avantageuse, les moyens de détection comportent au moins deux thermocouples, chacun des au moins deux thermocouples étant monté sur ladite au moins une portion latérale de la structure métallique.

Les moyens de détection sont de préférence montés sur ladite au moins une portion latérale de la structure métallique sur la face opposée à celle destinée à être orientée vers les miroirs.

Le module absorbeur peut comporter au moins deux tuyaux juxtaposés et s'étendant longitudinalement.

Dans un mode de réalisation, le module récepteur peut comporter une tôle intérieure pliée de sorte à former ladite cavité d'axe longitudinal, deux cornières fixées chacune sur les bord latéraux de la tôle intérieure formant les portions latérales, au moins deux éléments métalliques en arc de cercle fixés à chacune des extrémités longitudinales des cornières et entourant la tôle intérieure à l'opposé de l'ouverture de la cavité et un capot extérieure en forme de demi-tube fixées sur les éléments en arc de cercle.

La présente invention a également pour objet un récepteur comportant au moins deux modules récepteurs selon la présente invention, mis bout à bout et reliés l'un à l'autre, les modules absorbeurs étant reliés de manière étanche.

Les moyens de détections sont de préférence répartis sur toute la longueur du récepteur de sorte à permettre une surveillance complète du récepteur.

La présente invention a également pour objet une centrale solaire comportant au moins un récepteur selon la présente invention, un châssis pour suspendre ledit récepteur, des miroirs disposés sous le récepteur de sorte que les miroirs renvoient un flux solaire sur l'absorbeur, lesdits miroirs à étant orientables par rapport au récepteur, un moins un actionneur pour déplacer les miroirs et une unité de commande dudit au moins un actionneur.

Le récepteur peut présenter un axe longitudinal et les miroirs peuvent alors être répartis par groupe le long de l'axe, la même orientation étant imposée à tous les miroirs d'un même groupe, chaque groupe comportant au moins un actionneur commandé indépendamment des actionneurs des autres groupes.

Avantageusement, le récepteur comporte autant de moyens de détection que de groupe de miroirs, lesdits moyens de détection étant disposés sur les portions latérales de la structure métallique avec un pas décalé par rapport à celui des groupes de miroirs.

L'unité de commande, lors de la détection d'un écart de température supérieure à une valeur seuil, pour un groupe de miroirs donné, peut déterminer en fonction de l'orientation actuel dudit miroir et de l'orientation du soleil au moment de la détection de la différence de température, un angle de correction pour ledit groupe de miroirs et peut commander le au moins un actionneur du groupe de miroirs pour le faire pivoter de l'angle de correction déterminé, et peut ensuite vérifier l'effet de ladite rotation sur la différence de température.

La présente invention a également pour objet un procédé de surveillance d'une centrale solaire selon la présente invention, comportant les étapes :
a) mesure des différences de température le long du récepteur et comparaison par rapport à une valeur seuil,
b) lorsque une ou plusieurs différences de température est ou sont supérieures à la valeur donnée, détermination d'un angle de correction pour le ou les miroirs concernés,
c) modification de l'angle d'orientation du ou des miroirs concernés en fonction de l'angle de correction calculé,
d) vérification de l'effet de la modification,
e) si la différence de température pour un ou plusieurs miroirs concernés est supérieure à la valeur seuil, les étapes b), c) et d) sont répétées, sinon l'étape a) est répétée.

L'étape d) a par exemple lieu quelques heures ou un jour après l'étape c).

Si après plusieurs corrections la différence de température est toujours supérieure à la valeur seuil, une intervention individuelle sur les miroirs peut être effectué et/ou de mesures de protection de ladite structure par rapport au flux solaire peuvent être prises.

La valeur seuil est par exemple égale à 10°C.

### BRÈVE DESCRIPTION DES DESSINS

La présente invention sera mieux comprise à l'aide de la description qui va suivre et des dessins en annexes, sur lesquels :
- la figure 1 est une représentation schématique d'une centrale solaire à concentration de type "Fresnel",
- la figure 2 est une vue en perspective d'un exemple de récepteur selon la présente invention,
- les figures 3A à 3C sont des vues en coupe transversale du récepteur de la figure 2 sur lesquels sont représentés différents états de fonctionnement du récepteur détectables grâce à la présente invention,
- la figure 4 est une représentation graphique de la variation de température de la structure métallique le long de l'axe longitudinal du récepteur et de la variation de température du caloporteur le long de l'axe longitudinal, pour les différents états des figures 3A à 3C,
- la figure 5 est une vue identique à celle de la figure 2, sur laquelle sont repérés les thermocouples le long du récepteur.

### EXPOSÉ DÉTAILLÉ DE MODES DE RÉALISATION PARTICULIERS

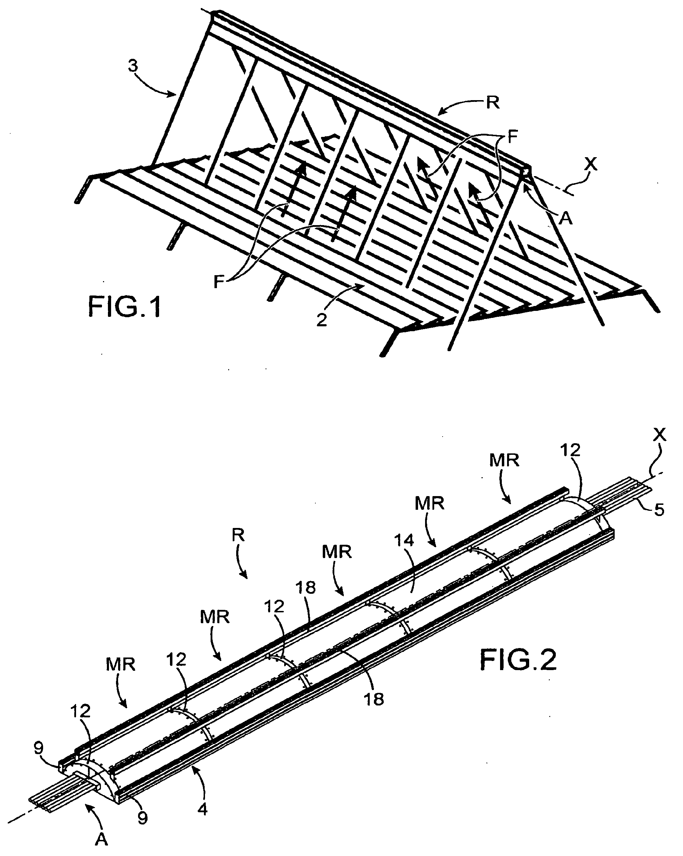

Sur la figure 1, on peut voir un schéma d'une centrale solaire à concentration de type "Fresnel" à laquelle s'applique l'invention.

La centrale solaire comporte un récepteur R, des miroirs 2 pour réfléchir les rayons solaires vers l'absorbeur, un système d'alimentation du récepteur en caloporteur "froid", un système de collecte du caloporteur "chaud" en sortie du récepteur et des moyens de conversion thermodynamique (non représentés) qui incluent par exemple des turbines à vapeur, des turbines à gaz... La centrale et le récepteur solaire s'étendent le long d'un axe longitudinal X.

Le récepteur solaire est suspendu au-dessus des miroirs 2. Ceux-ci réfléchissent le rayonnement solaire en direction du récepteur solaire R, plus spécifiquement en direction d'un absorbeur A. Les miroirs 2 sont orientables par rapport au sol de sorte à pouvoir orienter le flux solaire F en direction du récepteur. Par exemple, plusieurs miroirs sont accouplés et sont déplacés ensemble formant un ensemble monolithique. Les miroirs sont mobiles en rotation autour d'un axe parallèle à l'axe du récepteur.

Le récepteur est composé d'une pluralité de modules récepteurs connectés les uns aux autres le long de l'axe longitudinal X. Par exemple, il s'agit de modules mesurant 5 mètres de longueur.

Le récepteur est suspendu au dessus des miroirs par l'intermédiaire d'un moyen 3, dans l'exemple représenté il s'agit d'un châssis 3, à une hauteur comprise par exemple entre 7 m et 15 m.

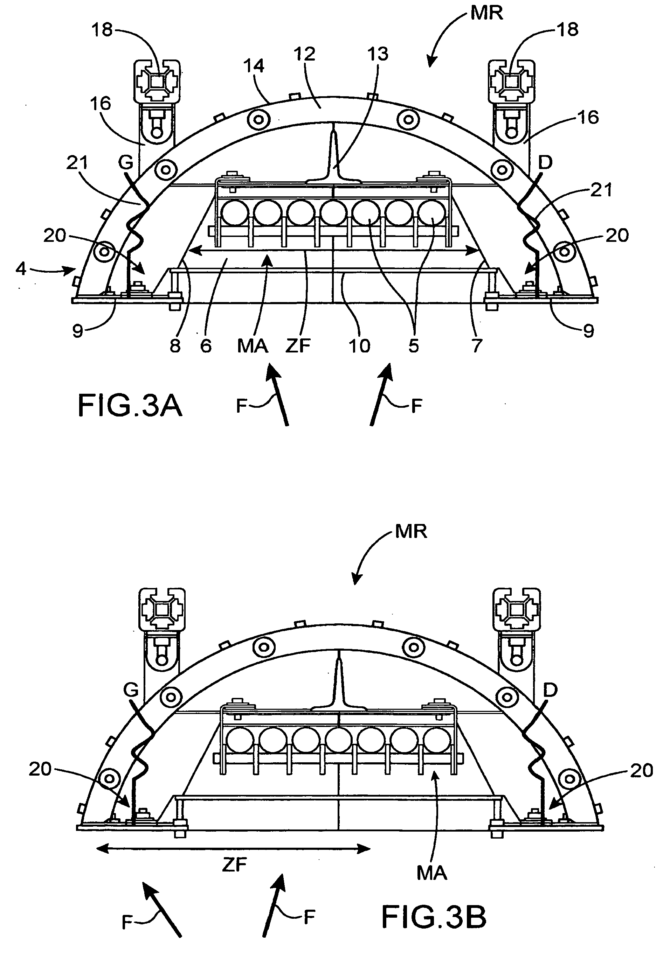

Sur les figures 2 et 3A à 3C, on peut voir en détail un exemple de réalisation d'un récepteur composé de plusieurs modules récepteurs MR. Sur la figure 2, le récepteur comporte 5 modules récepteurs.

Dans la suite de la description, nous décrirons un module récepteur.

Le module récepteur R comporte un module absorbeur A et une structure support 4 de l'absorbeur.

La structure support 4 est métallique et est destinée à permettre la suspension du récepteur au châssis.

Dans l'exemple représenté, chaque module absorbeur est formé de plusieurs tuyaux 5 dans lesquels est destiné à circuler un caloporteur ; les tuyaux sont disposés les uns à côté des autres dans la direction longitudinale. Les tuyaux 5 des modules absorbeurs successifs sont connectés bout à bout de manière étanche.

Le module récepteur MR comporte une cavité 6 dont l'ouverture est orientée vers les miroirs 2 et logeant le module absorbeur MA qui est fixé au fond de la cavité 6.

La cavité 6 est délimitée par une tôle intérieure 7 pliée, délimitant une cavité d'axe longitudinal X à section trapézoïdale. Vue en coupe transversale (figure 3A à 3C), la tôle 7 forme une jupe latérale 8 qui redirige avantageusement le flux lumineux provenant de miroirs 2 sur le module absorbeur MA. Le flux lumineux est symbolisé par les flèches F.

De préférence, une vitre 10 ferme la cavité et isole le module absorbeur de l'environnement extérieur.

Des cornières 9 s'étendent longitudinalement de part et d'autre de la tôle intérieure 7 et sont fixées à celles-ci, par exemple au moyen d'ensembles vis-écrou. Les cornières 9 servent à rigidifier la structure.

La structure support 4 comporte également des éléments métalliques 12 en forme d'arc de cercle, par exemples deux, disposées à chacune des extrémité longitudinales de la tôle intérieure pour la rigidifier et une poutre 13 à section en T qui est fixée sur toute la longueur de la tôle intérieure sur une face de la tôle opposée à celle sur laquelle est fixé l'absorbeur.

Les éléments 12 comportent à chacune de leur extrémité une patte 12.1 destinée à la fixation sur les cornières 9, par exemple par des ensembles vis-écrou.

Une tôle externe 14 en forme de demi-cylindre s'étend entre les deux éléments 12 et est fixée sur ceux-ci.

Avantageusement les éléments 12 comportent des anneaux 16 pour la manutention du module récepteur et sa suspension au châssis.

Des moyens de détection 20 d'un écart de température 20 par rapport à une température de référence sont prévus sur les cornières, et plus généralement sur les parties de la structure métallique entourant la cavité. Dans la représentation des figures 3A à 3C, les moyens de mesure 20 sont disposés à gauche et à droite de la cavité 6.

Les moyens de détection 20 sont avantageusement fixés sur une face intérieure des cornières 9, et non sur une face extérieure, afin de ne pas être éclairés par le flux thermique. Egalement, les moyens 20 sont avantageusement disposés en contact direct avec les cornières.

Dans l'exemple représenté sur les figures 3A à 3C, un fil de connexion 21 est schématisé. De manière pratique, les fils de connexion sont intégrés dans la structure métallique.

En outre, les mesures ne sont pas nécessairement transmises par voie filaire mais pourraient être transmises par voie radio, par exemple dans le cas de grandes centrales solaires.

Les moyens de détection sont distribués le long des cornières.

Les moyens 20 sont par exemple formés par des thermocouples au contact de la cornière 9. La détection de température se fait par conduction de la chaleur à travers la tôle des cornières, ce qui offre une bonne fiabilité de mesure en comparaison d'une mesure directement sur la face éclairée des cornières.

En effet, si le thermocouple reçoit directement le flux solaire concentré, la température mesurée par le thermocouple est en fait l'expression des propriétés d'absorption et d'émission de la gaine métallique protégeant le thermocouple.

Les thermocouples présentent l'avantage d'être des capteurs de température très simples et très robustes et ayant un prix de revient faible. En outre, ils sont facilement implantables sur la structure métallique et ne perturbent pas le fonctionnement du champ solaire et le transfert de chaleur vers le caloporteur.

En variante, on pourrait envisager des mesures par caméra infrarouge ou par réseaux de Bragg photoinscrits dans des fibres optiques.

Les moyens de mesure 20 sont tels qu'ils permettent de connaître une différence de température de la structure métallique de chaque côté de l'absorbeur. Par exemple, on met en oeuvre des paires de thermocouples. Chacun des thermocouples d'une paire est disposé de part et d'autre de la cavité et situé de préférence sensiblement dans un même plan orthogonal à l'axe longitudinal. En variante, les deux thermocouples peuvent être dans deux plans distincts.

De manière avantageuse le nombre de paires de thermocouples peut être réduit puisque les miroirs sont généralement déplacés par groupe et non individuellement, comme cela a été décrit précédemment.

Les groupes de miroirs peuvent par ailleurs être constitués de miroirs situés de part et d'autres de l'axe X, on bien encore du même côté. Par conséquent, on peut ne prévoir qu'une paire de thermocouple sur une section de récepteur éclairé par un même groupe de miroirs. Un groupe de miroirs mesure par exemple entre 44 m et 50 m de long. En supposant que l'orientation des miroirs d'un groupe est identique, il n'est pas nécessaire d'avoir une information sur la température en tout point la structure. Si les miroirs présentent un défaut d'orientation, cette mauvaise orientation est détectable quel que soit le point de la zone éclairée par le groupe de miroirs.

On peut cependant prévoir plusieurs paires de thermocouples par section de récepteur éclairé par un seul groupe de miroirs, afin de détecter un défaut de focalisation et/ou de positionnement d'un miroir ou plusieurs miroirs dans le groupe. Ce défaut peut être un défaut de réglage au montage ou un miroir cassé.

Ainsi on effectue un contrôle local. Dans ce cas, on effectue une correction sur un ou quelques miroirs et non sur le groupe.

On peut choisir un écartement entre deux paires de thermocouples successifs de quelques mètres, par exemple 10 m à 25 m. Pour un récepteur d'une longueur d'1 km, 80 thermocouples sont mis en oeuvre, ce qui correspond à uen puissance de 0,5 MWe.

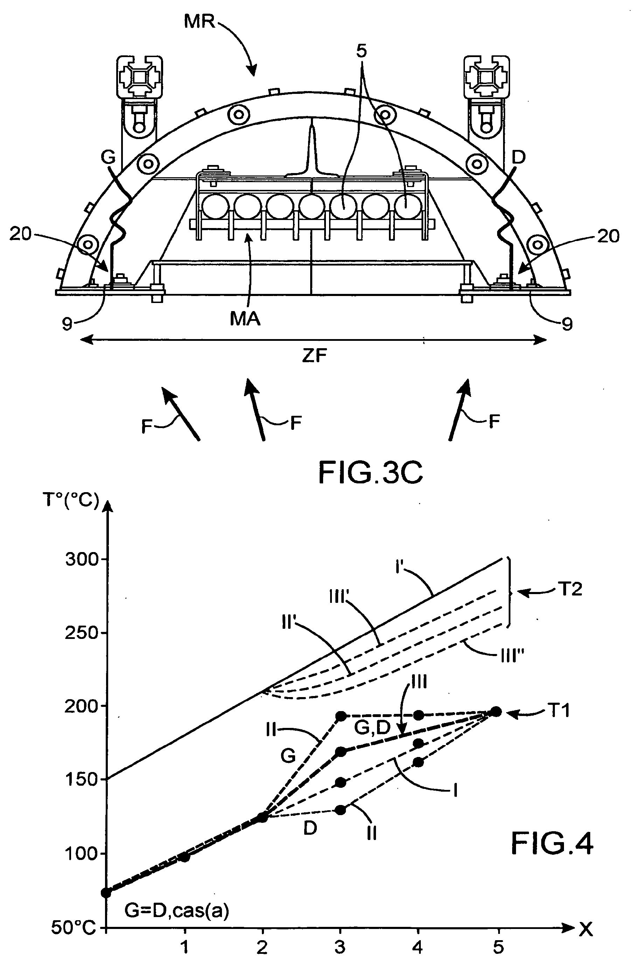

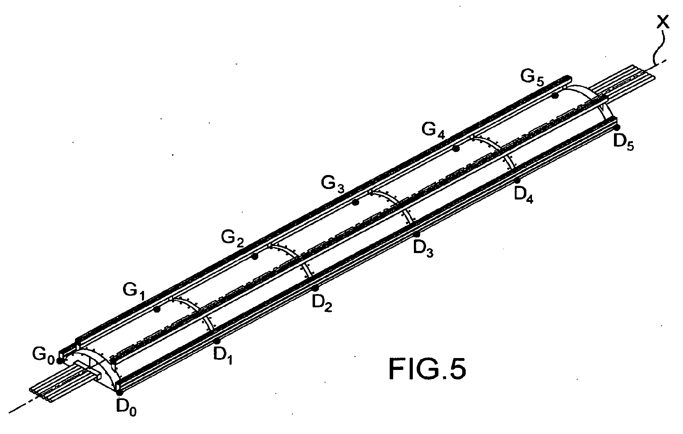

Sur les figures 3A à 3C sont représentés trois états d'illumination du récepteur. Sur la figure 4, sont représentée la température de la structure métallique T1 et la température T2 du caloporteur dans l'absorbeur en fonction de la position des thermocouples sur le récepteur le long de l'axe longitudinal. Sur la figure 5, on peut voir l'emplacement et la désignation des thermocouples, les thermocouples sont désignés par G ou D en fonction de leur position gauche ou droite, respectivement, de part et d'autre de l'axe et par 0 à 5 suivant leur position le long de l'axe longitudinal X.

Dans l'exemple représenté le récepteur mesure 50 m et des thermocouples 20 sont disposés tous les 10 m. On prend l'hypothèse d'un caloporteur entrant à 150°C et s'échauffant de 2°C à 5°C tous les mètres environ.

La zone du récepteur éclairée par le flux concentré, qui correspond à l'étendue de la tâche solaire, est représentée par une double flèche ZF.

Sur la figure 3A, le flux est correctement focalisé, la zone ZF est centrée sur l'absorbeur A et seul l'absorbeur est éclairé par la tâche solaire concentrée. La température mesurée par le thermocouple de gauche est sensiblement égale à celle du thermocouple de droite et est égale à une température de référence. La température se situe donc sur la droite I. Dans ce cas, la température de la structure métallique est en général comprise entre 50°C et 200°C pour un fluide caloporteur à 300°C environ.

Dans le cas où le caloporteur est de l'huile, la température normale de la structure métallique est comprise entre 50°C et 250°C; dans le cas où le caloporteur est de la vapeur d'eau, température normale de la structure métallique est comprise entre 50°C et 350°C. La température de fonctionnement normal varie le long du récepteur. En effet à l'entrée lorsque le caloporteur est "froid" la température du récepteur et donc de la structure métallique qui est chauffée par conduction, est inférieure à celle à la sortie du récepteur où le caloporteur est à sa température la plus élevée.

Sur la figure 3B, le flux solaire n'est pas correctement orienté et éclaire davantage le côté gauche du récepteur la tâche solaire couvre donc une partie uniquement de l'absorbeur et une partie de la structure métallique, et échauffe une partie de la cornière gauche 9. Par conséquent, la température mesurée par les thermocouples de gauche G3 et G4 est supérieure à celle mesurée par les thermocouples de droite D3 et D4, cette derrière étant inférieure à la température de référence.

La température de la cornière de gauche se lit sur la courbe II.

Sur la figure 3C est représenté le cas d'un flux solaire diffus, la zone ZF couvre à la fois l'absorbeur et au moins une partie des cornières gauche et droite. La dispersion du flux peut être par exemple due à des salissures sur les miroirs provoquant l'apparition d'un cône de diffusion.

La température peut se lire alors sur la courbe II de la figure 4, celle-ci est inférieure à la température dans le cas de la figure 3B, où seule l'une des cornières est éclairée.

Les courbe I', II', III' de T2 montrent la température du caloporteur en fonction des températures des différentes parties du récepteur, correspondant aux courbes I, II, III. La température de caloporteur la plus élevée en sortie est obtenue dans le cas où le flux est correctement orienté et/ou focalisé. La température la plus basse correspond au cas où le flux éclaire l'une ou l'autre des cornières et partiellement l'absorbeur. Dans le cas où le flux est faiblement diffus la température atteinte est intermédiaire. La courbe III" montre la température du caloporteur dans le cas d'une diffusion importante du flux solaire concentré, on remarque que celle-ci présente des valeurs inférieures à celles de la courbe II'.

Dans le cas de la figure 3B, la tâche solaire éclaire en partie l'absorbeur, mais on peut envisager le cas où le défaut de positionnement de miroirs serait tel que la tâche solaire n'éclairerait que la partie gauche ou droite de la structure métallique et plus du tout l'absorbeur.

Lorsqu'un défaut est détecté et donc un échauffement de la structure métallique, des mesures correctrices et/ou palliatrices peuvent être mises en oeuvre.

Il est possible de corriger un défaut de positionnement de la tâche solaire par ajout dans la boucle de commande du dispositif de mise en rotation des miroirs d'une fonction de correction qui rattrape les défauts locaux. Dans le cas d'un défaut tel que celui représenté sur la figure 3B, on commande un changement d'orientation du groupe de miroirs concerné en actionnant les actionneurs du groupe. Le choix de l'angle de rotation est déterminé en fonction de l'angle d'inclinaison actuel et de la position du soleil.

Par exemple, une rotation de quelques dixièmes de degré est commandée. Après une certain période de temps, par exemples quelques heures, voire une journée, l'effet la correction est vérifié. Si la différence de température mesurée est nulle ou inférieure à une valeur donnée, on considère que le défaut a disparu. Si une différence de température supérieure à la valeur seuil est encore détectée, un nouveau réglage est opéré.

Si après plusieurs corrections, le défaut n'a pas disparu, c'est que le défaut est dû par exemple à un moteur en panne et/ou un miroir cassé ou un miroir déréglé.... Un opérateur se déplace et intervient alors directement sur les miroirs et/ou sur les actionneurs...

Dans le cas d'un défaut de focalisation, l'opérateur intervient généralement sur place sur chaque miroir.

En outre, lorsqu'on détecte l'apparition de points chauds sur la structure pouvant l'endommager, que ceux-ci ne peuvent pas être supprimés malgré la mise en place de mesures correctrices, des mesures de protection sont prises aux endroits en question pour protéger la structure métallique. Par exemple, des écrans peuvent être mis en place, qui s'interposent entre la structure métallique les miroirs à distance de la structure métallique, c'est alors l'écran qui est illuminé et échauffé, et non plus la structure métallique, ou alors on peut disposer des surfaces réfléchissantes sur la structure métallique qui renvoie le flux optique et réduise l'échauffement de la structure métallique.

La surveillance du récepteur est très simple puisqu'elle utilise l'apparition d'un écart de température par rapport à la température de référence.

L'écart de température seuil au-delà duquel on considère qu'il y a un défaut est par exemple égal à de 10°C.

Grâce à l'invention, un suivi en temps réel de l'évolution de la qualité de la focalisation est possible. Si certains miroirs sont déformés ou mal focalisés, le problème sur le champ solaire est facilement et rapidement localisé, un problème de focalisation local peut être identifié parmi plusieurs kilomètres de récepteurs. Les opérations de maintenance et/ou de réglage sont alors ciblées, et il en résulte un gain d'efficacité et de temps important dans la maintenance et/ou le réglage Il en résulte de fait un gain au niveau du rendement de la centrale, puisque toute perte de flux solaire peut être rapidement corrigée.

De manière avantageuse et dans le cas où l'on mesure effectivement la température de la structure, après un certain temps de fonctionnement de la centrale solaire, par exemple quelque mois, un «apprentissage» des températures mesurées peut être intégré au système de surveillance. Celui-ci est associé à un dispositif d'alerte qui est activé lorsque, pour un flux solaire donné, sont mesurées des températures très différentes de celles obtenues lors d'un précédent jour présentant un flux solaire correspondant sensiblement au flux solaire en question.

L'invention a été décrite dans le cas d'un récepteur ayant une structure donnée, cependant la présente invention s'applique à tout récepteur comportant un absorbeur et une structure métallique s'étendant longitudinalement de part et d'autre de l'absorbeur. Par exemple, la cavité pourrait avoir un forme circulaire et la cornière de la structure métallique entourée la cavité, les thermocouples seraient alors disposés sur la cornière de manière diamétralement opposée.

En variante, on peut prévoir des moyens de détection de l'écart de température de type binaire. En dessous du seuil, les moyens de détection sont dans un premier état et au-dessus du seuil ils sont dans un deuxième état. Par exemple, les moyens de détection pourraient être du type bilame ou être formés par un matériau passant d'un état isolant à un état conducteur en fonction de la température. Ces moyens de détection indiqueraient alors si l'écart de température est en dessus ou en dessous du seuil.

La présente invention s'applique principalement aux centrales solaires de type Fresnel, mais elle peut également s'appliquer aux centrales solaires à tour.

## Revendications

1. Module récepteur (MR) pour centrale solaire, ledit module récepteur (MR) comportant une structure métallique (4) et un module absorbeur (MA), la structure métallique (4) définissant une cavité (6) dans le fond de laquelle est logé le module absorbeur (MA), ladite cavité (6) étant munie d'une ouverture destinée à être orientée vers au moins un miroir (2) de la centrale solaire, ladite ouverture étant bordée par au moins une portion latérale (9) de la structure métallique (4), **caractérisé en ce que** ledit module récepteur (MR) comporte également des moyens (20) disposés sur ladite au moins une portion latérale (9) pour détecter au moins un écart de température entre une température de référence et un premier point de la portion latérale (9), et un écart de température entre la température de référence et un deuxième point de la portion latérale (9), lesdits premier et deuxième points de la portion latérale étant opposés par rapport à un plan de symétrie de la cavité (6).

2. Module récepteur selon la revendication 1, ledit module récepteur (MR) présentant un axe longitudinal (X) et ladite cavité (6) s'étendant le long de l'axe longitudinal (X), ladite structure métallique (4) comportant deux portions latérales (9) s'étendant longitudinalement de part et d'autre de la cavité, le premier et le deuxième point de mesure étant disposés sur chacune de portions latérales (9) par rapport à l'axe longitudinal (X), avantageusement les deux points étant contenus dans un plan orthogonal à l'axe longitudinal (X).

3. Module récepteur selon la revendication 1 ou 2, dans lequel les moyens de détection (20) comportent au moins deux thermocouples, chacun des au moins deux thermocouples étant monté sur ladite au moins une portion latérale (9) de la structure métallique (4).

4. Module récepteur selon l'une des revendications 1, 2 ou 3, dans lequel les moyens de détection (20) sont montés sur ladite au moins une portion latérale (9) de la structure métallique (4) sur la face opposée à celle destinée à être orientée vers les miroirs.

5. Module récepteur selon l'une des 1 à 4, dans lequel le module absorbeur (MA) comporte au moins deux tuyaux (5) juxtaposés et s'étendant longitudinalement.

6. Module récepteur selon l'une des revendications 1 à 5 en combinaison avec la revendication 2, comportant une tôle intérieure (7) pliée de sorte à former ladite cavité (6) d'axe longitudinal (X), deux cornières (9) fixées chacune sur les bord latéraux de la tôle intérieure (7) formant les portions latérales, au moins deux éléments métalliques (12) en arc de cercle fixés à chacune des extrémités longitudinales des cornières (9) et entourant la tôle intérieure (7) à l'opposé de l'ouverture de la cavité (6) et un capot extérieure (14) en forme de demi tube fixées sur les éléments (12) en arc de cercle.

7. Récepteur comportant au moins deux modules récepteurs (MR) selon l'une des revendications 1 à 6, mis bout à bout et reliés l'un à l'autre, les modules absorbeurs (MA) étant reliés de manière étanche.

8. Récepteur selon la revendication 7, dans lequel les moyens de détection (20) sont répartis sur toute la longueur du récepteur.

9. Centrale solaire comportant au moins un récepteur selon l'une des revendications 7 ou 8, un châssis (3) pour suspendre ledit récepteur, des miroirs (2) disposés sous le récepteur de sorte que les miroirs renvoient un flux solaire sur l'absorbeur (A), lesdits miroirs (2) étant orientables par rapport au récepteur, an moins un actionneur pour déplacer les miroirs et une unité de commande dudit au moins un actionneur.

10. Centrale solaire selon la revendication 9, dans laquelle le récepteur présente un axe longitudinal (X) et les miroirs (2) sont répartis par groupe le long de l'axe, la même orientation étant imposée à tous les miroirs d'un même groupe, chaque groupe comportant au moins un actionneur commandé indépendamment des actionneurs des autres groupes.

11. Centrale solaire selon la revendication 10, dans laquelle le récepteur comporte autant de moyens de détection (20) que de groupe de miroirs, lesdits moyens de détection (20) étant disposés sur les portions latérales (9) de la structure métallique avec un pas décalé par rapport à celui des groupes de miroirs.

12. Centrale solaire selon la revendication 10 ou 11, dans laquelle l'unité de commande, lors de la détection d'un écart de température supérieure à une valeur seuil, pour un groupe de miroirs donné, détermine en fonction de l'orientation actuel dudit miroir et de l'orientation du soleil au moment de la détection de la différence de température, un angle de correction pour ledit groupe de miroirs et commande le au moins un actionneur du groupe de miroirs pour le faire pivoter de l'angle de correction déterminé, et vérifie ensuite l'effet de ladite rotation sur la différence de température.

13. Procédé de surveillance d'une centrale solaire selon l'une des revendications 9 à 12, comportant les étapes :
a) mesure des écarts de température le long du récepteur et comparaison par rapport à une valeur seuil,
b) lorsque une ou plusieurs écarts de température est ou sont supérieure (s) à la valeur seuil, détermination d'un angle de correction pour le ou les miroir(s) concerné(s),
c) modification de l'angle d'orientation du ou des miroir(s) concerné(s) en fonction de l'angle de correction calculé,
d) vérification de l'effet de la modification, avantageusement quelques heures ou un jour après l'étape c),
e) si l'écart de température pour un ou plusieurs miroir(s) concerné(s) est supérieure à la valeur seuil, les étapes b), c) et d) sont répétées, sinon l'étape a) est répétée.

14. Procédé selon la revendication 13, dans lequel, si après plusieurs corrections la différence de température est toujours supérieure à la valeur seuil, une intervention individuelle sur les miroirs est effectuée et/ou de mesures de protection de ladite structure par rapport au flux solaire sont prises.

15. Procédé selon la revendication 13 ou 14, dans lequel la valeur seuil est égale à 10°C.

## Patentansprüche

1. Empfangsmodul (MR) für ein Solarkraftwerk, wobei das Empfangsmodul (MR) eine Metallstruktur (4) und ein Absorbermodul (MA) umfasst, wobei die Metallstruktur (4) einen Hohlraum (6) begrenzt, an dessen Boden das Absorbermodul (MA) aufgenommen ist, wobei der Hohlraum (6) mit einer Öffnung versehen ist, die dazu vorgesehen ist, in Richtung wenigstens eines Spiegels (2) des Solarkraftwerks ausgerichtet zu werden, wobei an die Öffnung wenigstens ein Seitenabschnitt (9) der Metallstruktur (4) grenzt, **dadurch gekennzeichnet, dass** das Empfangsmodul (MR) auch Mittel (20) aufweist, die auf dem wenigstens einen Seitenabschnitt (9) angeordnet sind, um wenigstens einen Temperaturunterschied zwischen einer Referenztemperatur und einem ersten Punkt des Seitenabschnitts (9) zu erfassen, und einen Temperaturunterschied zwischen der Referenztemperatur und einem zweiten Punkt des Seitenabschnitts (9), wobei der erste und der zweite Punkt des Seitenabschnitts in Bezug auf eine Symmetrieebene des Hohlraums (6) einander gegenüber liegen.

2. Empfangsmodul nach Anspruch 1, wobei das Empfangsmodul (MR) eine Längsachse (X) aufweist und sich der Hohlraum (6) entlang der Längsachse (X) erstreckt, wobei die Metallstruktur (4) zwei Seitenabschnitte (9) aufweist, die sich in Längsrichtung auf beiden Seiten des Hohlraums erstrecken, wobei der erste und der zweite Messpunkt bezüglich der Längsachse (X) auf jedem der Seitenabschnitte (9) angeordnet sind, wobei die beiden Punkte vorteilhafterweise in einer zur Längsachse (X) senkrechten Ebene liegen.

3. Empfangsmodul nach Anspruch 1 oder 2, bei welchem die Erfassungsmittel (20) wenigstens zwei Thermoelemente umfassen, wobei jedes der wenigstens zwei Thermoelemente auf dem wenigstens einen Seitenabschnitt (9) der metallischen Struktur (4) angebracht ist.

4. Empfangsmodul nach einem der Ansprüche 1, 2 oder 3, bei welchem die Erfassungsmittel (20) auf dem wenigstens einen Seitenabschnitt (9) der metallischen Struktur (4) auf der Seite angebracht sind, die gegenüber derjenigen Seite liegt, die zu den Spiegeln hin ausgerichtet werden soll.

5. Empfangsmodul nach einem der Ansprüche 1 bis 4, bei welchem das Absorbermodul (MA) wenigstens zwei aneinander angrenzende Rohre (5) aufweist, die sich in Längsrichtung erstrecken.

6. Empfangsmodul nach einem der Ansprüche 1 bis 5 in Kombination mit Anspruch 2, umfassend ein Innenblech (7), das zum Bilden des Hohlraums (6) der Längsachse (X) gefaltet ist, zwei jeweils an den Seitenrändern des Innenblechs (7) befestigte Eckwinkel (9), die die Seitenabschnitte bilden, wenigstens zwei Metallelemente (12) in Kreisbogenform, die jeweils an den Längsenden der Eckwinkel (9) befestigt sind und das Innenblech (7) umgeben, gegenüber der Öffnung des Hohlraums (6), und eine an den Elementen (12) in Bogenform befestigte halbrohrförmige Außenhaube (14).

7. Empfänger, welcher wenigstens zwei Empfangsmodule (MR) nach einem der Ansprüche 1 bis 6 aufweist, die Ende an Ende und miteinander verbunden angeordnet sind, wobei die Absorbermodule (MA) abdichtend verbunden sind.

8. Empfänger nach Anspruch 7, wobei die Erfassungsmittel (20) über die gesamte Länge des Empfängers verteilt sind.

9. Solarkraftwerk, umfassend wenigstens einen Empfänger nach einem der Ansprüche 7 oder 8, ein Gehäuse (3) zum Aufhängen des Empfängers, Spiegel (2), die unter dem Empfänger derart angeordnet sind, dass die Spiegel eine Sonneneinstrahlung auf den Absorber (A) zurückschicken, wobei die Spiegel (2) bezüglich des Empfängers ausgerichtet werden können, wenigstens ein Betätigungselement zum Verlagern der Spiegel und eine Steuerung des wenigstens einen Betätigungselements.

10. Solarkraftwerk nach Anspruch 9, bei welchem der Empfänger eine Längsachse(X) aufweist und die Spiegel (2) in Gruppen entlang der Achse verteilt sind, wobei alle Spiegel derselben Gruppe dieselbe Ausrichtung aufweisen müssen, wobei jede Gruppe wenigstens ein Betätigungselement aufweist, das unabhängig von den Betätigungselement der anderen Gruppen gesteuert ist.

11. Solarkraftwerk nach Anspruch 10, bei welchem der Empfänger genauso viele Erfassungsmittel (20) aufweist wie Spiegelgruppen, wobei die Erfassungsmittel (20) an den Seitenabschnitten (9) der Metallstruktur mit einem Versatzschritt bezüglich der Spiegelgruppen angeordnet sind.

12. Solarkraftwerk nach Anspruch 10 oder 11, bei welchem die Steuereinheit bei Erfassung eines über einem Schwellenwert liegenden Temperaturunterschieds für eine gegebene Spiegelgruppe abhängig von der tatsächlichen Ausrichtung des Spiegels und der Ausrichtung der Sonne zum Zeitpunkt der Erfassung des Temperaturunterschieds einen Korrekturwinkel für die Spiegelgruppe bestimmt und das wenigstens eine Betätigungselement der Spiegelgruppe derart steuert, dass es um den bestimmten Korrekturwinkel geschwenkt wird, und anschließend die Auswirkung der Schwenkbewegung auf den Temperaturunterschied überprüft.

13. Überwachungsverfahren für ein Solarkraftwerk nach einem der Ansprüche 9 bis 12, welches folgende Schritte umfasst:
a) Messen der Temperaturunterschiede entlang dem Empfänger und Vergleich mit einem Schwellenwert,
b) wenn ein oder mehrere Temperaturunterschiede größer als der Schwellenwert ist/sind, Bestimmen eines Korrekturwinkels für den oder die betroffenen Spiegel,
c) Ändern des Ausrichtungswinkels des oder der betroffenen Spiegel abhängig vom berechneten Korrekturwinkel,
d) Überprüfen der Auswirkung der Änderung, vorteilhafterweise einige Stunden oder einen Tag nach Schritt c),
e) falls der Temperaturunterschied für einen oder mehrere betroffene Spiegel größer als der Schwellenwert ist, werden die Schritte b), c) und d) wiederholt, sonst wird Schritt a) wiederholt.

14. Verfahren nach Anspruch 13, bei welchem, falls nach mehreren Korrekturen der Temperaturunterschied immer noch größer als der Schwellenwert ist, ein individueller Eingriff bei den Spiegeln erfolgt und/oder Schutzmaßnahmen der Struktur bezüglich der Sonneneinstrahlung ergriffen werden.

15. Verfahren nach Anspruch 13 oder 14, bei welchem der Schwellenwert 10°C beträgt.

## Claims

1. A receiver module (MR) for a solar power station, said receiver module (MR) comprising a metal structure (4) and an absorber module (MA), the metal structure (4) defining a cavity (6) at the base of which the absorber module (MA) is housed, said cavity (6) having an aperture configured to be aligned towards at least one mirror (2) of the solar power station, said aperture being edged by at least one side portion (9) of the metal structure (4), **characterized in that** said receiver module (MR) also comprising means (20) positioned on said at least one side portion (9) to detect at least one temperature difference between a reference temperature and a first point of the side portion (9), and a temperature difference between the reference temperature and a second point of the side portion (9), said first and second points of the side portion being opposite one another relative to a plane of symmetry of the cavity (6).

2. A receiver module according to claim 1, said receiver module (MR) having a longitudinal axis (X) and said cavity (6) extends along the longitudinal axis (X), said metal structure (4) comprising two side portions (9) extending longitudinally either side of the cavity, the first and the second measurement points being positioned on each of the side portions (9) relative to the longitudinal axis (X), and advantageously both points being contained in a plane orthogonal to the longitudinal axis (X).

3. A receiver module according to claim 1 or 2, in which the detection means (20) comprise at least two thermocouples, each of the at least two thermocouples being installed on said at least one side portion (9) of the metal structure (4).

4. A receiver module according to one of claims 1, 2 or 3, in which the detection means (20) are installed on said at least one side portion (9) of the metal structure (4) on the face opposite the face configured to be aligned to face the mirrors.

5. A receiver module according to one of claims 1 to 4, in which the absorber module (MA) comprises at least two pipes (5) which are adjacent and which extend longitudinally.

6. A receiver module according to one of claims 1 to 5, in combination with claim 2, comprising an internal metal plate (7) folded so as to form said cavity (6) of longitudinal axis (X), two angles (9), each attached to the side edges of the internal metal plate (7), forming the side portions, with at least two metal elements (12) forming an arc of a circle attached to each of the longitudinal ends of the angles (9) and surrounding the internal metal plate (7) opposite the aperture of the cavity (6), and an external cover (14) in the form of half-tube attached to the elements (12) forming an arc of a circle.

7. A receiver comprising at least two receiver modules (MR) according to one of claims 1 to 6, placed end-to-end and connected to one another, where the absorber modules (MA) are connected in sealed fashion.

8. A receiver according to claim 7, in which the detection means (20) are distributed along the entire length of the receiver.

9. A solar power station comprising at least one receiver according to either of claims 7 or 8, a frame (3) to suspend said receiver, mirrors (2) positioned under the receiver such that the mirrors reflect a solar flux on to the absorber (A), said mirrors (2) being able to be aligned relative to the receiver, at least one actuator to move the mirrors and one control unit for controlling said at least one actuator.

10. A solar power station according to claim 9, in which the receiver has a longitudinal axis (X) and the mirrors (2) are distributed in groups along the axis, the same alignment being imposed on all the mirrors of a given group, and each group comprising at least one actuator controlled independently of the actuators of the other groups.

11. A solar power station according to claim 10, in which the receiver comprises as many detection means (20) as there are groups of mirrors, where said detection means (20) are positioned on the side portions (9) of the metal structure at an interval which is staggered relative to that of the groups of mirrors.

12. A solar power station according to claim 10 or 11, in which, when a temperature difference is detected which is higher than a threshold value, for a given group of mirrors, the control unit determines, in accordance with the actual alignment of said mirror and of the alignment of the sun at the time when the temperature difference is detected, a correction angle for said group of mirrors, and controls the at least one actuator of the group of mirrors, causing it to pivot through the determined correction angle, and then checks the effect of said rotation on the temperature difference.

13. A method for monitoring a solar power station according to one of the claims 9 to 12, comprising the following steps:
a) measurement of the temperature differences along the length of the receiver, and comparison with a threshold value,
b) when one or more temperature difference(s) is/are greater than the threshold value, determination of a correction angle for the mirror or mirrors concerned,
c) modification of the angle of alignment of the mirror or mirrors concerned in accordance with the calculated correction angle,
d) verification of the effect of the modification, this verification advantageously occurring several hours or one day after step c),
e) if the temperature difference for one or more mirrors concerned is greater than the threshold value, steps b), c) and d) are repeated; otherwise step a) is repeated.

14. A method according to claim 13 in which, if after several corrections the temperature difference is still greater than the threshold value, an individual action is taken on the mirrors and/or measures are taken to protect said structure relative to the solar flux.

15. A method according to claim 13 or 14, in which the threshold value is equal to 10°C.
